(19) Europäisches Patentamt
European Patent Office
Office européen des brevets

(11) **EP 2 937 985 B1**

(12) **FASCICULE DE BREVET EUROPEEN**

(45) Date de publication et mention
de la délivrance du brevet:
**28.12.2016 Bulletin 2016/52**

(51) Int Cl.:
***H02M 7/487*** *(2007.01)*  ***H02M 3/158*** *(2006.01)*
***H02M 5/42*** *(2006.01)*

(21) Numéro de dépôt: **15157308.6**

(22) Date de dépôt: **03.03.2015**

(54) **Convertisseur de puissance multi-niveaux**

Mehrstufiger Leistungswandler

Multi-level power converter

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **03.04.2014 FR 1452963**

(43) Date de publication de la demande:
**28.10.2015 Bulletin 2015/44**

(73) Titulaire: **Schneider Toshiba Inverter Europe SAS
27120 Pacy sur Eure (FR)**

(72) Inventeur: **Lavieville, Jean-Paul
78470 Saint Lambert des Bois (FR)**

(74) Mandataire: **Dufresne, Thierry et al
Schneider Electric Industries SAS
Service Propriété Industrielle
35 rue Joseph Monier - CS 30323
92506 Rueil-Malmaison Cedex (FR)**

(56) Documents cités:
**DE-A1-102012 214 666**

• ZHIGUO PAN ET AL: "A diode-clamped multilevel converter with reduced number of clamping diodes", 2004 IEEE APPLIED POWER ELECTRONICS CONFERENCE AND EXPOSITION, APEC 04, IEEE, ANAHEIM, CA, USA, vol. 2, 22 février 2004 (2004-02-22), pages 820-824, XP010703326, DOI: 10.1109/APEC.2004.1295917 ISBN: 978-0-7803-8269-5
• ALIAN CHEN ET AL: "Research on Hybrid-Clamped Multilevel-Inverter Topologies", IEEE TRANSACTIONS ON INDUSTRIAL ELECTRONICS, IEEE SERVICE CENTER, PISCATAWAY, NJ, USA, vol. 53, no. 6, 1 décembre 2006 (2006-12-01), pages 1898-1907, XP011151190, ISSN: 0278-0046, DOI: 10.1109/TIE.2006.885154

**Description**

**DOMAINE TECHNIQUE**

La présente invention concerne les convertisseurs de puissance multi-niveaux plus particulièrement destinés à fonctionner dans le domaine de la moyenne tension.

**ÉTAT DE LA TECHNIQUE**

Les convertisseurs de puissance moyenne tension connus utilisent généralement des interrupteurs à semi-conducteurs mis en série pour permettre une montée en tension. La difficulté majeure de la mise en série de ces interrupteurs à semi-conducteurs est d'obtenir des tensions identiques aux bornes de tous ces interrupteurs à semi-conducteurs à chaque instant. Si des surcharges transitoires ou permanentes apparaissent, la destruction des interrupteurs à semi-conducteurs peut intervenir.

Des techniques basées sur l'entrelacement des commandes des interrupteurs associées à l'utilisation de transformateurs se sont développées, elles permettent de gérer la répartition des tensions et de reconstituer les formes d'ondes. Mais les transformateurs ont un coût non négligeable et ils empêchent la réalisation de convertisseurs compacts.

Une autre solution est apparue, il s'agit de la topologie dite NPC (pour neutral point clamped ou clampage par le neutre). Une cellule de type NPC comporte deux paires d'interrupteurs à semi-conducteur en série, deux diodes en série connectées d'un côté au point commun entre les deux interrupteurs de la première paire et de l'autre au point commun entre les deux interrupteurs de la seconde paire. On trouve de plus, une série de deux condensateurs connectée aux bornes de l'ensemble formé par les paires d'interrupteurs à semi-conducteurs. Le point commun entre les deux diodes en série est relié au point commun entre les deux condensateurs de la série.

Cette topologie conduit à une forme d'onde satisfaisante et à une réduction des contraintes de tension sur les interrupteurs à semi-conducteurs. Par contre, il peut se produire des déséquilibres de la tension aux bornes des condensateurs.

Des améliorations de la topologie originale NPC sont intervenues, en remplaçant les deux diodes par une paire d'interrupteurs à semi-conducteurs. Cette topologie est dénommée ANPC à 3 niveaux de tension.

Une autre amélioration est apparue pour augmenter le niveau de tension acceptable en mettant des interrupteurs en série et en ajoutant un condensateur. Cette topologie est dénommée ANPC à 5 niveaux de tension. Elle a été développée par la société ABB. Elle est toutefois limitée actuellement à des niveaux de tension de l'ordre de 6,9 kV.

Une autre technique est basée l'association de cellules à condensateur flottant connues également sous la dénomination de cellules élémentaires imbriquées. Une source de tension peut être reliée à une source de courant via un nombre quelconque de telles cellules élémentaires en série. Chaque cellule élémentaire comporte deux interrupteurs à semi-conducteur en série et un dispositif de stockage d'énergie tel un condensateur relie entre elles deux cellules élémentaires voisines à la manière d'une échelle. Cette solution présente toutefois des inconvénients liés à la présence du condensateur flottant entre deux cellules élémentaires. Plus le nombre de cellules élémentaires augmente, plus le surcoût lié aux condensateurs augmente et plus la quantité d'énergie stockée dans ces condensateurs est importante.

Face aux difficultés résultant de la mise en série de nombreux interrupteurs à semi-conducteurs pour atteindre des niveaux de tension élevés, il a été préconisé de limiter le nombre d'interrupteurs en série, et d'associer des étages à cellules imbriquées en cascade, chaque étage comportant plusieurs cellules élémentaires imbriquées.

Ainsi dans la demande de brevet US 2007/0025126, il est décrit un convertisseur de puissance multi-niveaux comportant au moins deux bras configurés avec des cellules élémentaires imbriquées reliées entre elles par des condensateurs.

Dans une première configuration, chaque bras comporte une cascade de 3 étages. Ces étages ont chacun un rang différent compris entre un et trois. Chaque étage comporte autant de paires de cellules élémentaires imbriquées que le rang de l'étage. Ces paires de cellules élémentaires imbriquées peuvent prendre trois niveaux de tension. L'inconvénient de cette première configuration est qu'elle utilise beaucoup d'interrupteurs et de condensateurs, ce qui fait qu'elle est coûteuse et peu fiable.

Dans une seconde configuration, chaque bras comporte une cascade de deux étages, l'un de rang un et l'autre de rang deux. Chaque étage comporte autant de triplets de cellules élémentaires de base imbriquées. Ces triplets de cellules élémentaires peuvent prendre quatre niveaux de tension. Dans cette seconde variante, les condensateurs utilisés seront chargés des niveaux de tension différents selon qu'ils appartiennent au premier étage ou au second étage. Cela présente une limitation à la standardisation. D'autre part des inductances parasites des condensateurs sont d'autant plus élevées que la tenue en tension augmente. Des surtensions de commutation pour les cellules de niveaux de tensions les plus importants vont limiter l'attrait du montage.

Les documents ZHIGUO PAN ET AL: "A diode-clamped multilevel converter with reduced number of clamping diodes", DE102012214666A1 et ALIAN CHEN ET AL: "Research on Hybrid-Clamped Multilevel-Inverter Topologies" divulguent des convertisseurs de puissance multi-niveaux.

## EXPOSÉ DE L'INVENTION

La présente invention a pour but de proposer un convertisseur multi-niveaux pouvant travailler à des niveaux de tension supérieurs à ceux de l'art antérieur, sans avoir besoin de recourir aux transformateurs ni de multiplier le nombre d'interrupteurs à semi-conducteurs.

Un autre but de l'invention est de proposer un convertisseur multi-niveaux qui est moins cher et plus fiable que les convertisseurs multi-niveaux de l'art antérieur, pour un niveau de tension donné.

Encore un autre but de l'invention est de proposer un convertisseur multi-niveaux qui utilise des lots de condensateurs standards de tenue en tension limitée.

Un but supplémentaire de l'invention de proposer un convertisseur multi-niveaux qui limite l'apparition d'inductances parasites.

Ces buts sont atteints par l'association de cellules de type NPC et de cellules capacitives.

Plus particulièrement, la présente invention est un convertisseur multi-niveaux comportant un ou plusieurs bras, configurés pour être connectés chacun entre une source de tension et une source de courant. Le ou chaque bras comprend deux étages connectés en cascade avec un premier étage destiné à être connecté à la source de tension et un second étage destiné à être connecté à la source de courant. Le premier étage comporte n étages élémentaires de rang un à n (n supérieur à un) connectés en cascade, l'étage élémentaire de rang un étant connecté au second étage et l'étage élémentaire de rang n étant destiné à être connecté à la source de tension. Chaque étage élémentaire comporte une paire de cellules de type NPC identiques connectées en série, la connexion étant directe dans l'étage élémentaire de rang un, la connexion se faisant via n-1 cellules capacitives pour chaque étage élémentaire de rang n (n supérieur à un). Le second étage comporte lui une cellule de type à condensateur flottant.

Dans ce convertisseur multi-niveaux, une cellule capacitive comporte deux dispositifs de stockage d'énergie agencés en série, ces dispositifs de stockage d'énergie ayant une même capacité de stockage d'énergie.

Dans un étage élémentaire, les cellules de type NPC comportent un pont capacitif à deux dispositifs de stockage d'énergie ayant une même capacité de stockage d'énergie. Chaque dispositif de stockage d'énergie d'une cellule capacitive de cet étage élémentaire a une même capacité de stockage d'énergie qu'un des dispositifs de stockage d'énergie d'une cellule de type NPC.

Ainsi, tous les dispositifs de stockage d'énergie du premier étage ont une même capacité de stockage d'énergie.

Pour respecter les règles de connexion en source de tension et source de courant, au moins une des cellules de type NPC d'un étage élémentaire est connectée à une cellule de type NPC d'un étage élémentaire voisin via une inductance.

Dans le convertisseur objet de l'invention, une cellule de type NPC comporte un quadruplet d'interrupteurs élémentaires agencés en série parmi lesquels deux sont en position extrême et deux sont en position médiane. Un interrupteur élémentaire en position extrême et un interrupteur élémentaire en position médiane qui ne sont pas reliés directement sont toujours dans des états complémentaires, l'un étant passant et l'autre étant bloqué, ces deux interrupteurs élémentaires forment une cellule de commutation élémentaire.

Une cellule de type NPC possède une fonction de conversion qui lie la tension appliquée en entrée de ladite cellule à la tension présente en sortie de ladite cellule. Les deux cellules de commutation élémentaires de ladite cellule possèdent également chacune une fonction de conversion. La fonction de conversion de la cellule de type NPC dépend des fonctions de conversion des deux cellules de commutation élémentaires.

En outre, les cellules de type NPC d'un même étage élémentaire ont une même fonction de conversion.

Dans les deux cellules de type NPC d'un même étage élémentaire, les interrupteurs élémentaires homologues sont commandés de manière identique.

Dans le convertisseur objet de l'invention, une cellule de type à condensateur flottant comporte un quadruplet d'interrupteurs élémentaires agencés en série parmi lesquels deux sont en position extrême et deux sont en position médiane. Les deux interrupteurs élémentaires en position extrême sont toujours dans des états complémentaires, les deux interrupteurs élémentaires en position médiane sont toujours dans des états complémentaires, l'un étant passant et l'autre étant bloqué. Les deux interrupteurs élémentaires en position extrême forment une première cellule de commutation élémentaire. Les deux interrupteurs élémentaires en position médiane forment une seconde cellule de commutation élémentaire.

Les interrupteurs élémentaires comportent chacun un commutateur électronique de puissance commandable associé avec une diode connectée en antiparallèle.

Les dispositifs de stockage d'énergie sont choisis parmi un condensateur, une batterie, une pile à combustible.

La présente invention concerne également un variateur de vitesse comportant une cascade avec un convertisseur ainsi caractérisé fonctionnant en redresseur AC/DC et un convertisseur ainsi caractérisé fonctionnant en onduleur DC/AC, reliés entre eux par leurs côtés continu par l'intermédiaire une source de tension.

**BRÈVE DESCRIPTION DES DESSINS**

La présente invention sera mieux comprise à la lecture de la description d'exemples de réalisation donnés à titre purement indicatif et nullement limitatif en faisant référence aux dessins annexés sur lesquels :

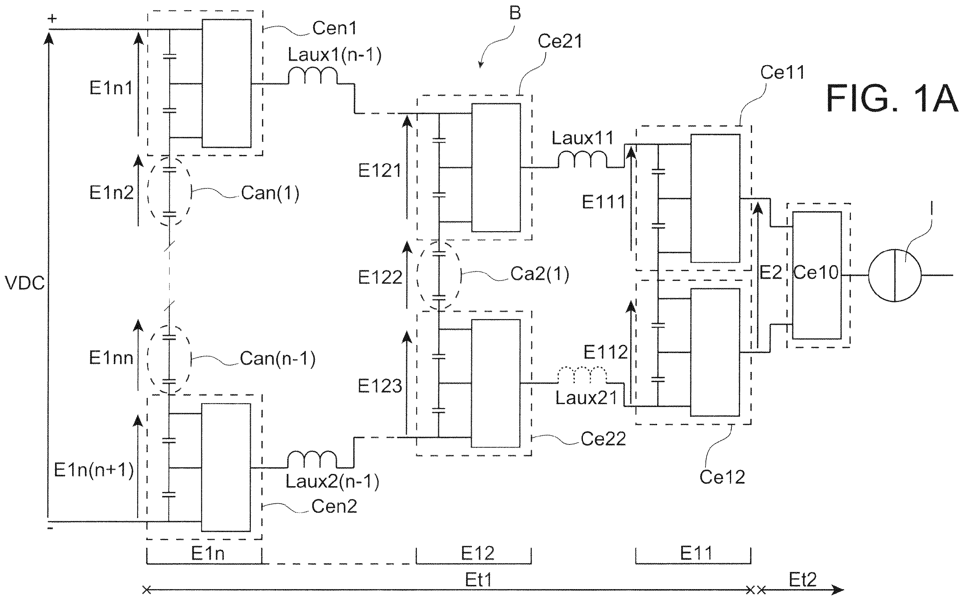

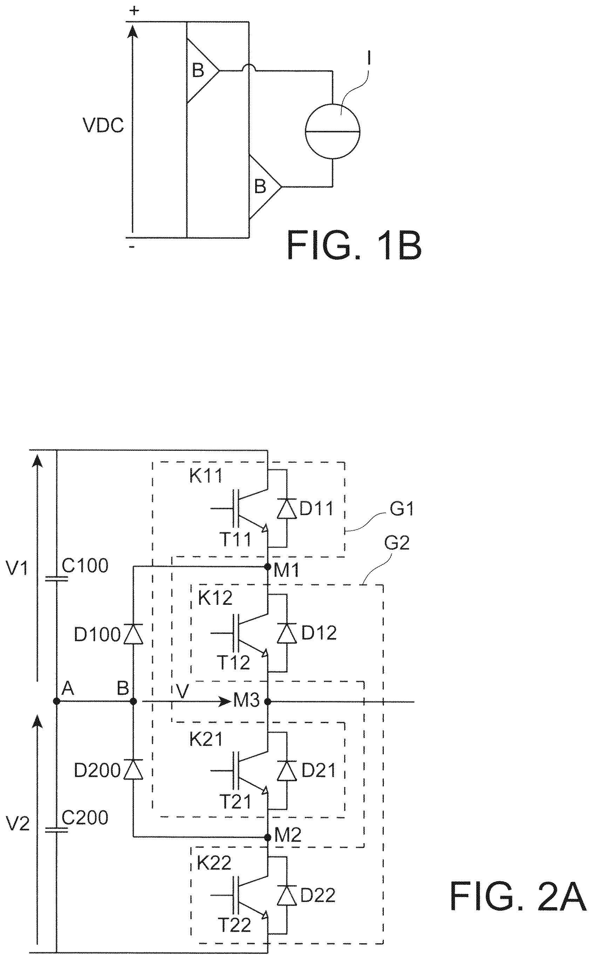

la figure 1A illustre, de manière très schématique, un bras de convertisseur multi-niveaux objet de l'invention avec un premier étage et un second étage montés en cascade, le premier étage étant une cascade de n étages élémentaires, la figure 1B est un convertisseur multi-niveaux monophasé comportant deux bras similaires à celui de la figure 1A;

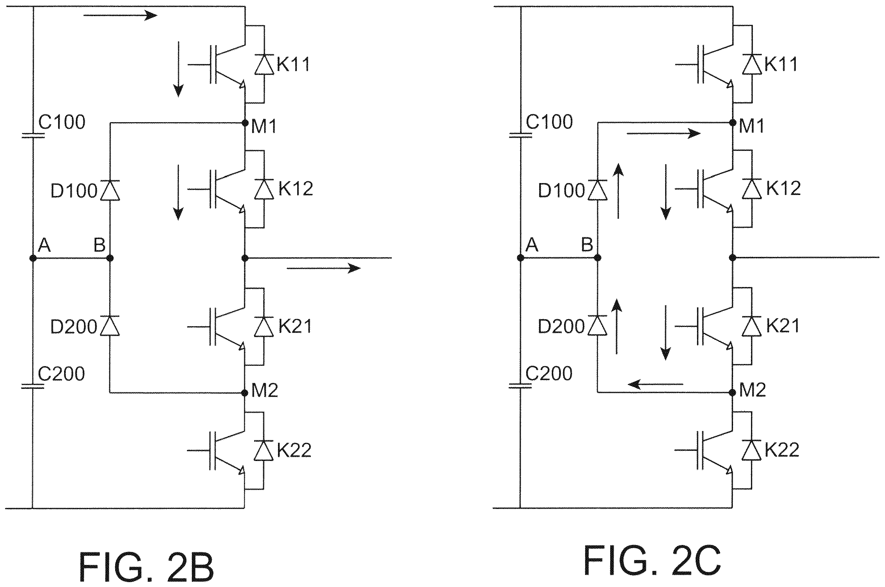

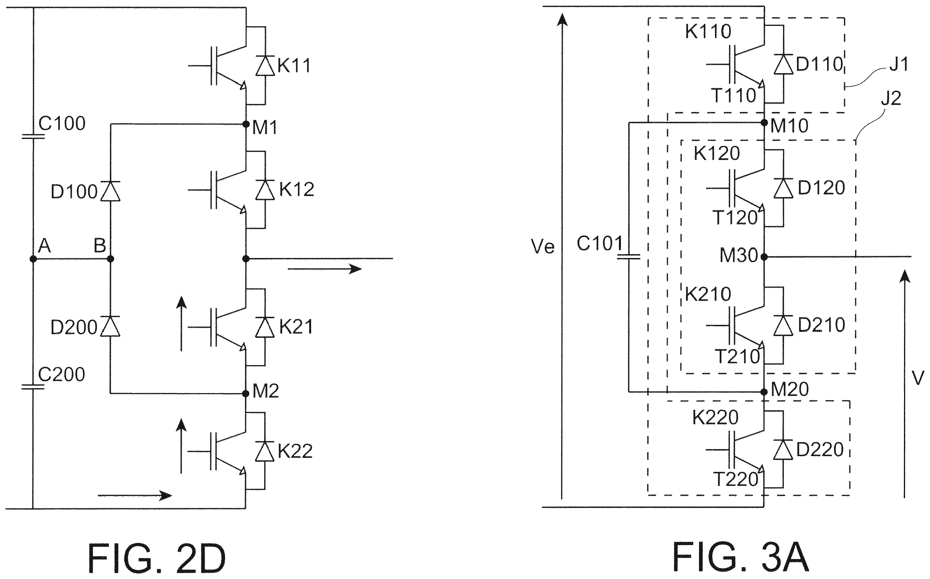

la figure 2A montre une cellule de type NPC du convertisseur multi-niveaux objet de l'invention et les figures 2B, 2C, 2D illustrent la circulation du courant dans cette cellule conduisant aux trois états de la cellule de type NPC;

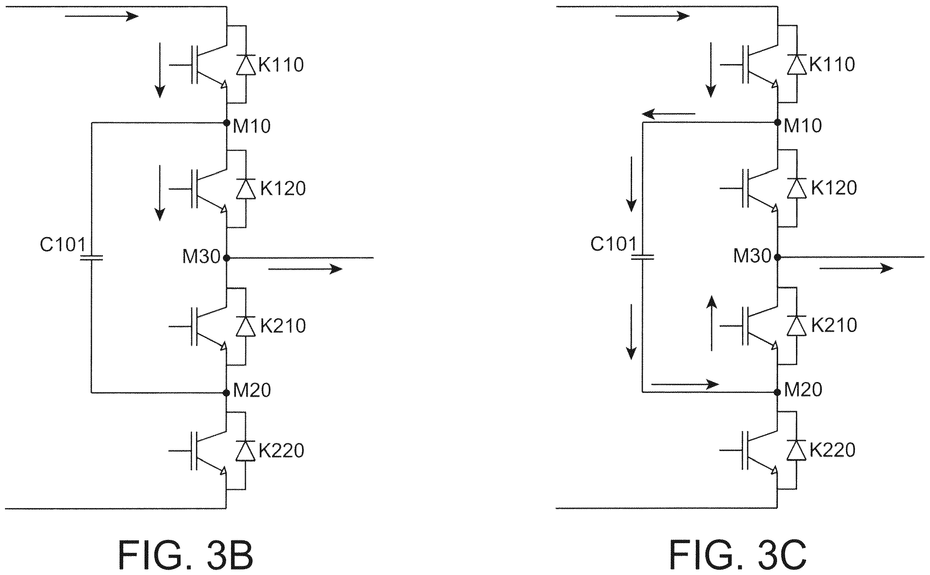

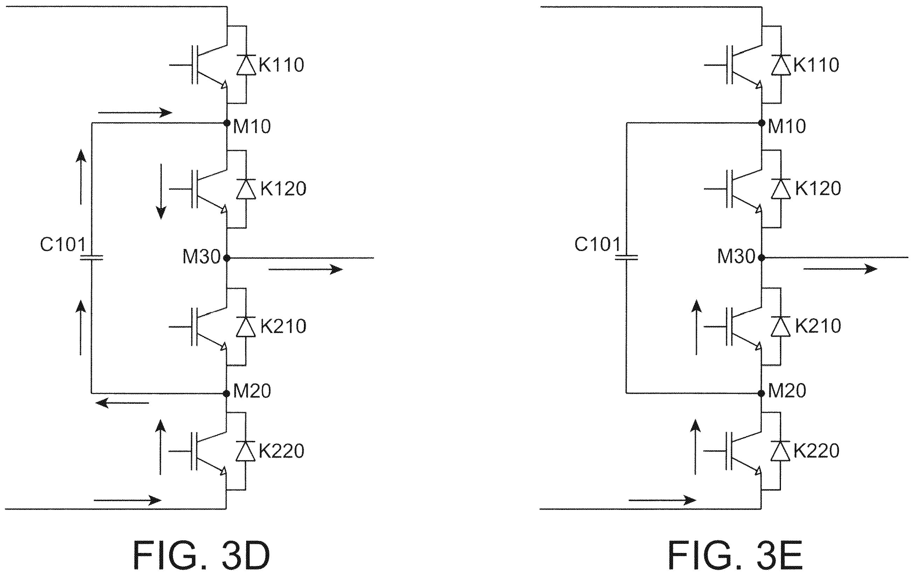

la figure 3A montre une cellule de type à condensateur flottant à trois niveaux de tension du convertisseur multi-niveaux objet de l'invention et les figures 3B, 3C, 3D, 3E illustrent la circulation du courant dans cette cellule à condensateur flottant conduisant aux quatre états de la cellule à condensateur flottant ;

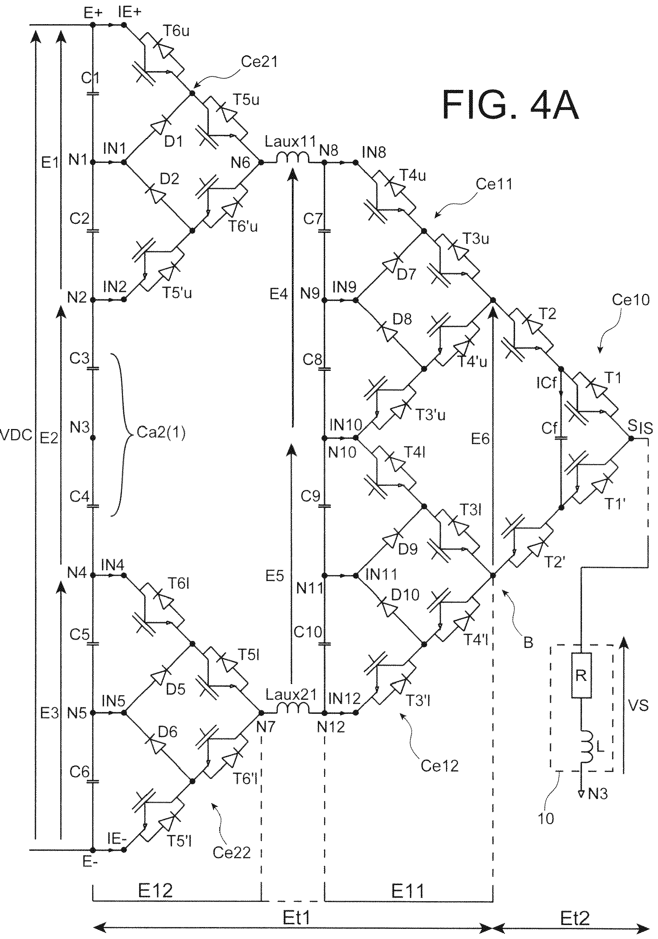

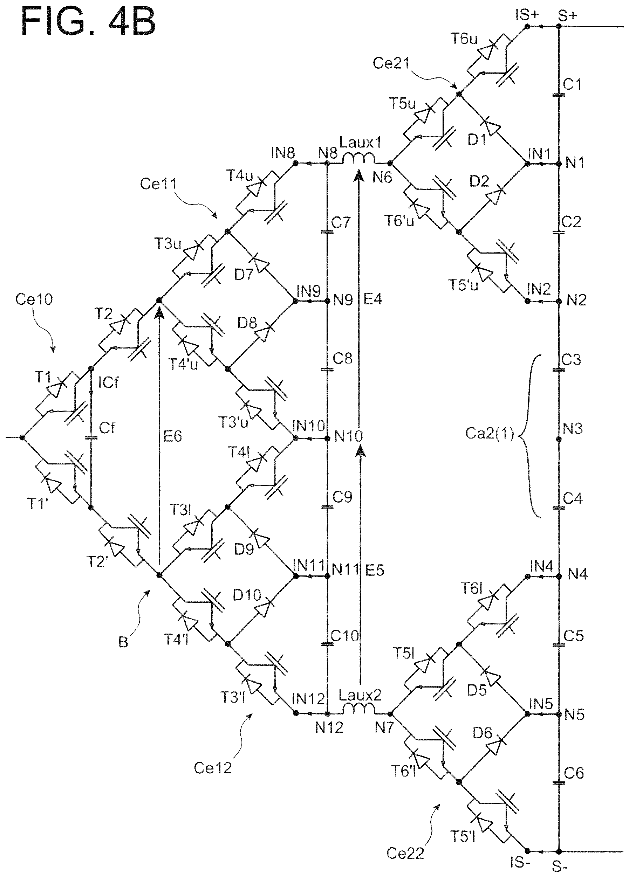

les figures 4A et 4B illustrent des exemples de bras de convertisseur multi-niveaux objet de l'invention dans lequel le premier étage est une cascade de deux premiers étages élémentaires, la figure 4A est relative à un onduleur et la figure 4B est relative à un redresseur ;

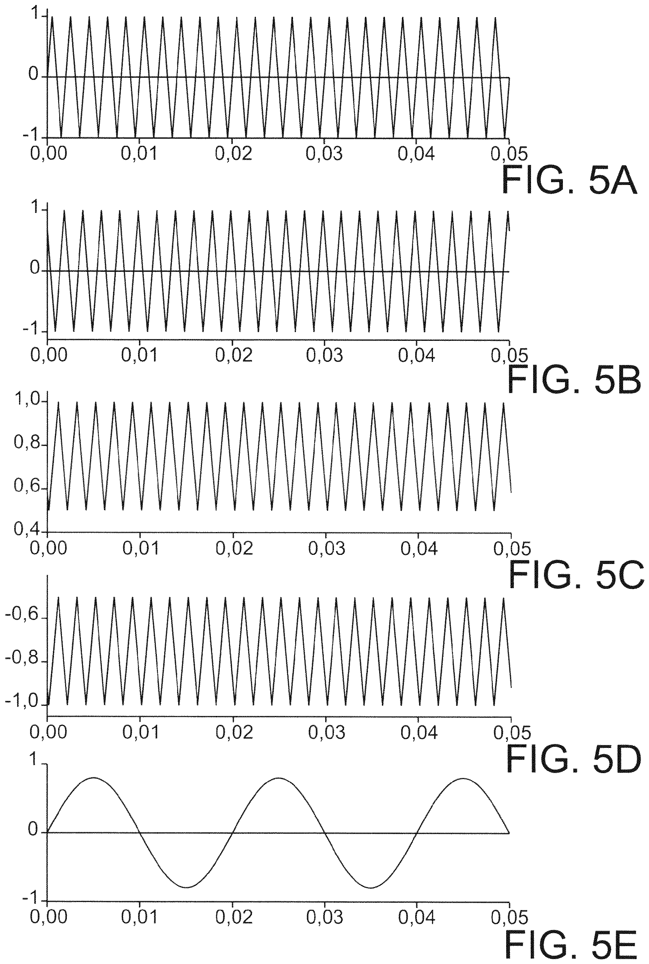

les figures 5A et 5B illustrent respectivement des signaux triangulaires pour la commande des interrupteurs élémentaires des deux cellules de commutation élémentaires d'une cellule à condensateur flottant comme la cellule Ce10 de la figure 4A dans le cas d'une commande de type modulation de largeur d'impulsion MLI; les figures 5C et 5D illustrent respectivement des signaux triangulaires pour la commande des interrupteurs élémentaires des deux cellules de commutation élémentaires d'une cellule de type NPC comme la cellule Ce11 de la figure 4A dans le cas d'une commande de type modulation de largeur d'impulsion MLI; la figure 5E illustre un signal de consigne à comparer aux signaux triangulaires pour déterminer des instants de commutation des interrupteurs élémentaires des cellules de commutation élémentaires;

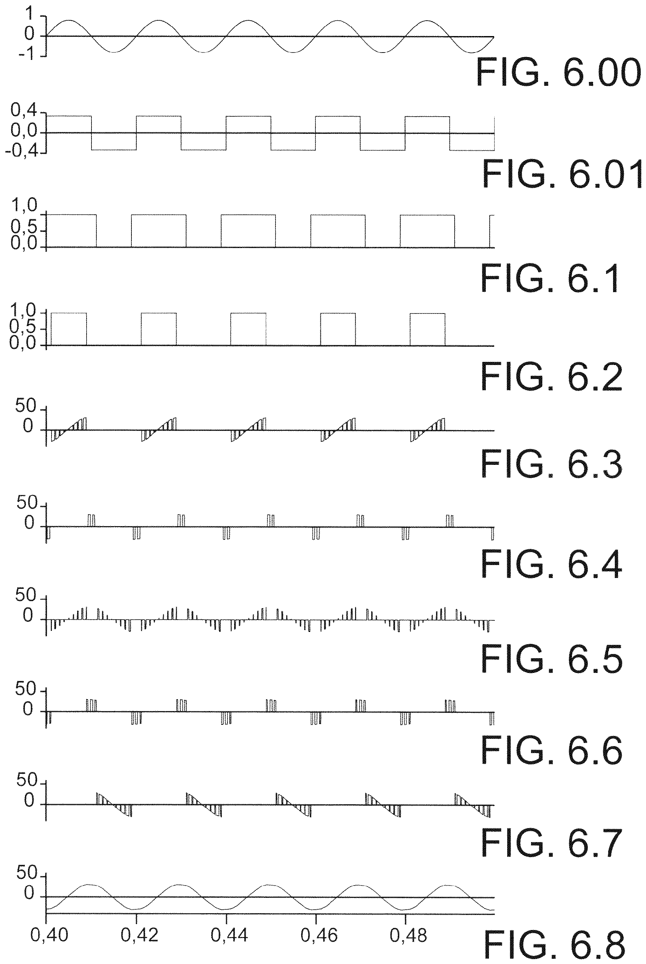

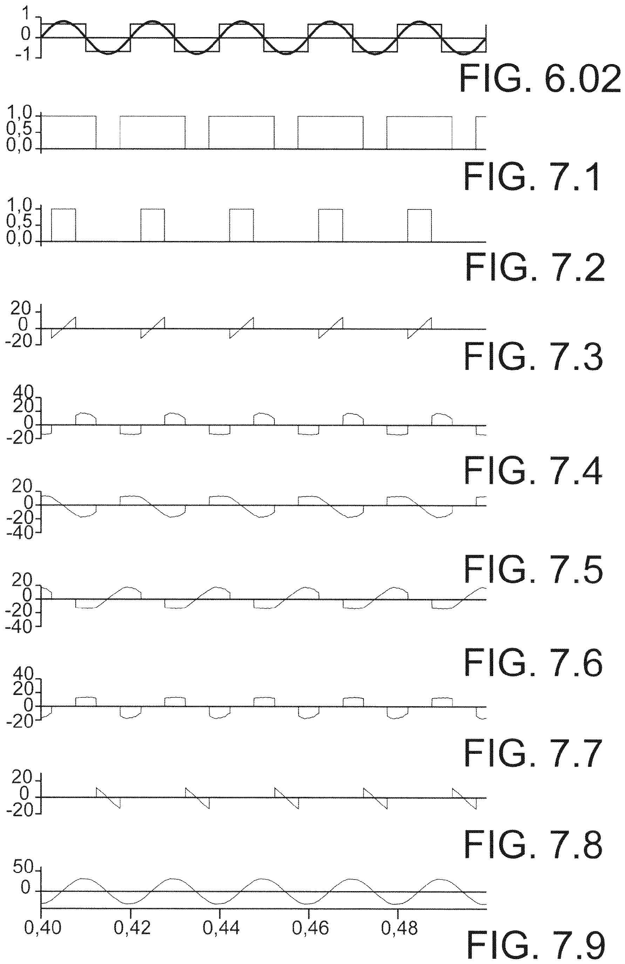

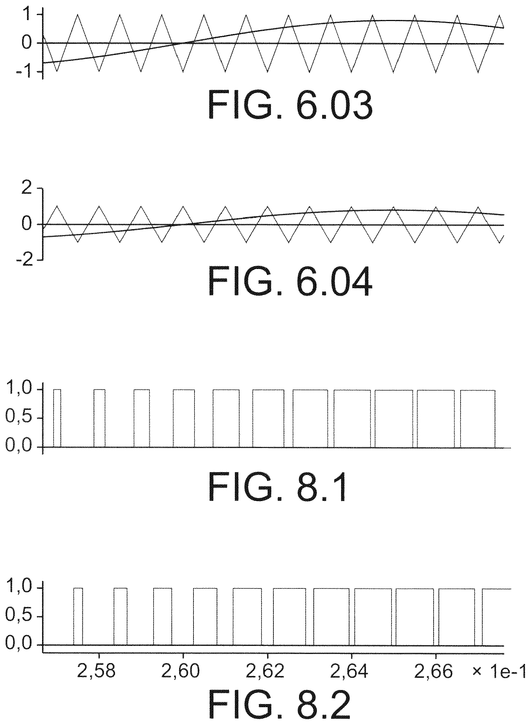

les figures 6 à 9 illustrent des signaux dans le cas d'un convertisseur, tel que celui de la figure 4A, avec une charge 10 de type RL branchée entre le noeud S et le noeud N3 :

les figures 6.00 à 6.04 illustrent respectivement le signal de consigne Vref à comparer à la porteuse Car3 pour la commande des interrupteurs élémentaires T4u et T3u , à la porteuse Car4 pour la commande des interrupteurs élémentaires T5u et T6u , à la porteuse Car1 pour la commande de l'interrupteur élémentaire T1, à la porteuse Car2 pour la commande de l'interrupteur élémentaire T2 ;

les figures 6.1 à 6.8 sont des chronogrammes correspondant au premier étage élémentaire E11 : les figures 6.1 et 6.2 illustrent respectivement le signal de commande des interrupteurs élémentaires T3u, T4u ; les figures 6.3 à 6.7 illustrent respectivement le courant circulant du noeud N8 vers l'interrupteur élémentaire T4u, le courant circulant du noeud N9 vers les diodes D7 et D8, le courant circulant du noeud N10 vers les interrupteurs élémentaires T3'u et T4l, le courant circulant du noeud N11 vers les diodes D9 et D10, le courant circulant du noeud N12 vers l'interrupteur élémentaire T3'l ; la figure 6.8 illustre le courant de sortie du bras et alimentant la charge 10;

les figures 7.1 à 7.9 sont des chronogrammes correspondant au second étage élémentaire E12 : les figures 7.1 et 7.2 illustrent respectivement le signal de commande des interrupteurs élémentaires T5u, T6u ; les figures 7.3 à 7.8 illustrent respectivement le courant circulant de la borne E+ devant être connectée à la source de tension VDC vers l'interrupteur élémentaire T6u, le courant circulant du noeud N1 vers les diodes D1 et D2, le courant circulant du noeud N2 vers l'interrupteur élémentaire T5'u, le courant circulant du noeud N4 vers l'interrupteur élémentaire T6l, le courant circulant du noeud N5 vers les diodes D5 et D6, le courant circulant de la borne E- devant être connectée à la source de tension VDC vers l'interrupteur élémentaire T5'l ; la figure 7.9 illustre le courant de sortie du bras et alimentant la charge 10;

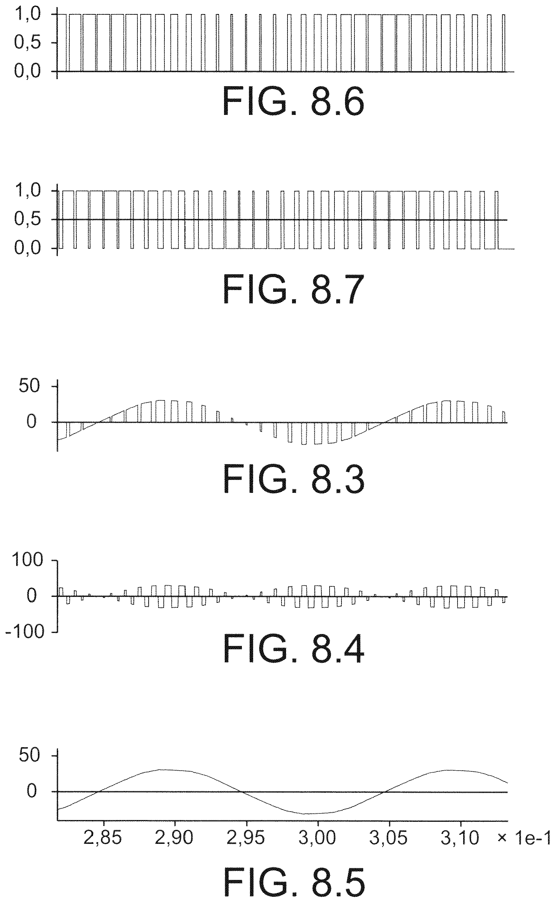

les figures 8.1 à 8.5 sont des chronogrammes correspondant au second étage E2, les figures 8.1 et 8.2 illustrent respectivement le signal de commande des interrupteurs élémentaires T1, T2 avec une première base de temps, la même que celle des figures 6.03 et 6.04; les figures 8.3 et 8.4 illustrent respectivement le courant circulant depuis l'interrupteur élémentaire T2 vers l'interrupteur élémentaire T1 et le courant circulant de l'interrupteur élémentaire T2 vers le condensateur Cf; la figure 8.5 illustre le courant de sortie du bras et alimentant la charge 10; les figures 8.6 et 8.7 illustrent de nouveau le signal de commande des interrupteurs élémentaires T1, T2 avec une seconde base de temps, la même que celle de figures 8.3 à 8.5;

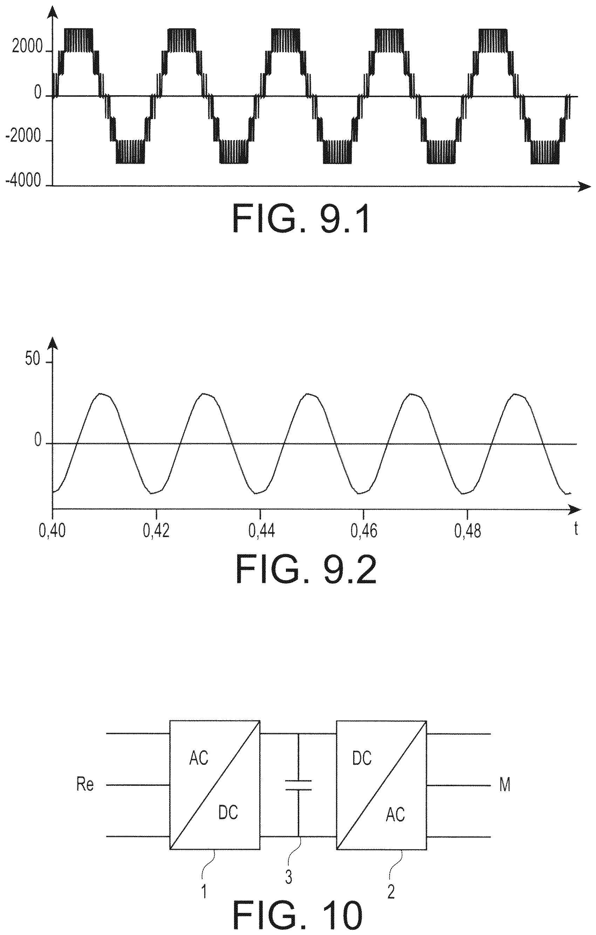

les figures 9.1 et 9.2 illustrent respectivement un chronogramme de la tension Vs aux bornes de la charge 10 et du courant de sortie Is du bras et alimentant la charge 10 ;

la figure 10 montre un exemple de variateur de vitesse associant deux convertisseurs multi-niveaux objet de l'invention, l'un fonctionnant en redresseur et l'autre en onduleur.

## EXPOSÉ DÉTAILLÉ DE MODES DE RÉALISATION PARTICULIERS

On se réfère à la figure 1A qui montre un schéma électrique d'un bras B d'un convertisseur multi-niveaux objet de l'invention, dans une structure générale. - Il permet de travailler à des tensions du domaine de la moyenne tension jusqu'à environ 13,8 kV.

Il va être décrit dans un premier temps dans un exemple d'un bras de convertisseur DC/AC.

Le convertisseur multi-niveaux objet de l'invention, comme celui illustré sur la figure 1B, comporte un ou plusieurs bras B similaires à celui représenté sur la figure 1A. Ils sont destinés à être branchés chacun entre deux mêmes sources d'alimentation électrique, parmi lesquelles une source de tension VDC et une source de courant I. Deux bras sont utilisés dans un convertisseur monophasé. Trois bras seraient utilisés dans un convertisseur triphasé.

Le bras B de la figure 1A est destiné à être connecté entre la source de tension VDC et la source de courant I. Le convertisseur peut alors fonctionner en convertisseur DC/AC (onduleur) ou bien en convertisseur AC/DC (redresseur). Dans le cas d'un convertisseur DC/AC, la source de courant est alternative et peut être par exemple un moteur électrique, et la source de tension est continue et peut être par exemple un bus à courant continu branché en sortie d'un redresseur.

Dans le cas d'un convertisseur AC/DC, la source de courant est alternative et peut être par exemple le réseau d'alimentation et la source de tension est continue et peut être par exemple un condensateur ou une batterie.

Le bras B de convertisseur comporte deux étages Et1, Et2 connectés ensemble en cascade. Le premier étage Et1 ou étage d'entrée est destiné à être branché à la source de tension VDC qui est continue et le second étage Et2 ou étage de sortie est destiné à être branché à la source de courant I dans la configuration de convertisseur DC/AC qui est illustré sur les figures 1.

Dans une configuration de convertisseur AC/DC, le premier étage Et1 ou étage de sortie serait branché à une source de tension continue et le second étage Et2 ou étage d'entrée serait branché à une source de courant alternative. L'entrée et la sortie du convertisseur sont inversées lorsque l'on passe du fonctionnement en onduleur au fonctionnement en redresseur et vice versa.

Le premier étage Et1 est formé de n étages élémentaires E11, E12, ..., E1n ayant un rang compris entre 1 et n (n entier supérieur à un) connectés en cascade. L'étage élémentaire E11 de rang 1 est connecté au second étage Et2. L'étage élémentaire E1n de rang n est destiné à être branché à la source de tension VDC.

Le second étage Et2 est formé d'une cellule de type à condensateur flottant Ce10 à trois niveaux de tension.

Chaque étage élémentaire E11, E12, ..., E1n du premier étage Et1 comporte une paire de cellules de type NPC (Ce11, Ce12), (Ce21, Ce22),...., (Cen1, Cen2) reliées en série. La liaison entre les deux cellules de type NPC (Ce11, Ce12), (Ce21, Ce22),...., (Cen1, Cen2) d'un même étage élémentaire E11, E12,....E1n de rang 1 à n, se fait par n-1 cellules capacitives. Pour l'étage élémentaire E11 de rang 1, la liaison entre ses deux cellules de type NPC Ce11, Ce12 est alors directe. Lorsque n-1 est supérieur à un, il y a n-1 cellules capacitives qui sont connectées en série. La cellule capacitive de l'étage élémentaire E12 de rang 2 est référencée Ca2(1) et par analogie celles de l'étage élémentaire En de rang n Can(1) à Can(n-1). Chaque cellule capacitive comporte une paire de dispositifs de stockage d'énergie en série. Les deux dispositifs de stockage d'énergie d'une cellule capacitive ont une même capacité de stockage d'énergie. De plus, tous les dispositifs de stockage d'énergie des cellules capacitives du premier étage Et1 ont une même valeur de stockage d'énergie.

Les dispositifs de stockage d'énergie utilisés dans le convertisseur objet de l'invention, que ce soit dans les cellules de type NPC ou à condensateur flottant ou bien encore dans les cellules capacitives peuvent être réalisés par tout dispositif capable de stocker de l'énergie électrique et de la restituer sous forme de tension. Les dispositifs de stockage d'énergie peuvent prendre la forme d'un condensateur, d'une batterie, d'une pile à combustible ...

Par la suite, dans un souci de simplification, la référence VDC représentera à la fois la source de tension et la tension aux bornes de cette source de tension.

On s'aperçoit que la tension VDC a été scindée en n+1 tensions associées en série, dont deux plus extrêmes, dénommées E1n1 et E1n(n+1), sont les tensions d'entrée des cellules de type NPC Cen1 et Cen2.

Dans le fonctionnement onduleur, on a représenté une seule source de tension VDC. Il est bien entendu que cette source de tension VDC pourrait être constituée d'un ensemble de n+1 sources de tension élémentaires indépendantes.

Chaque cellule de type NPC comporte, comme on le verra plus loin en se référant à la description de la figure 3A, un pont diviseur capacitif d'entrée qui matérialise une source de tension. Les tensions E1n1, E1n(n+1) sont les tensions aux bornes de ces ponts capacitifs.

Les tensions E1n2 à E1nn sont des tensions flottantes qui sont appliquées aux n-1 cellules capacitives Can(1) à Can(n-1). Ces n-1 cellules capacitives Can(1) à Can(n-1) forment des sources de tension flottantes.

De la même manière, les sorties des cellules de type NPC Cen1 et Cen2 de l'étage élémentaire E1n sont considérées comme des sources de tension flottantes.

La liaison entre deux étages élémentaires voisins, se fait entre deux cellules de type NPC respectives, via une inductance Laux11, Laux21, ... Laux1(n-1), Laux2(n-1). Chacune de ces inductances est assimilable à une source de courant pour respecter les règles de connexion entre source de tension et source de courant. Les valeurs de ces deux inductances sont les mêmes. Par contre, deux inductances qui ne relient pas deux mêmes étages n'ont pas forcément les mêmes valeurs. En variante, il serait possible de n'utiliser qu'une seule inductance pour relier un premier étage élémentaire et un second étage élémentaire voisin. Elle serait placée entre une cellule de type NPC du premier étage élémentaire et une cellule de type NPC du second étage élémentaire voisin. L'autre cellule de type NPC du premier étage élémentaire serait reliée directement à l'autre cellule de type NPC du second étage élémentaire voisin. C'est pour schématiser cette variante que l'inductance Laux21 sur la figure 1A a été représentée en pointillés. Cela signifie qu'elle est optionnelle. Dans ce cas, l'unique inductance utilisée aurait pour valeur la somme des deux inductances du montage à deux inductances.

Au niveau de l'étage élémentaire E12 de rang 2, les sorties des cellules de type NPC Ce21 et Ce22 sont connectées via les inductances Laux11, Laux21 à deux sources de tension flottantes constituées par les ponts capacitifs des deux cellules de type NPC Ce11, Ce12. Ces deux sources de tension ont un point commun. Les références E111, E112 correspondent aux tensions aux bornes de ces ponts capacitifs.

Les sorties des cellules de type NPC Ce11 et Ce12 réalisent une source de tension flottante E2 qui est appliquée en entrée de la cellule de type à condensateur flottant Ce10 du second étage Et2. La structure et le fonctionnement d'une cellule de type à condensateur flottant à trois niveaux de tension sont décrits en se référant aux figures 3A à 3E.

On choisit les composants du nième étage élémentaire E1n de manière à ce que la tension d'entrée VDC soit scindée en n+1 tensions d'entrée égales appliquées à chacune des deux cellules de type NPC Cen1, Cen2 et des n-1 cellules capacitives Can(1),..,Can(n-1). On applique ainsi VDC/n+1 sur chacune des cellules du nième étage élémentaire.

On peut définir une fonction de conversion f associée à chaque cellule de type NPC ou à condensateur flottant, elle lie la tension d'entrée Ve appliquée à ladite cellule à la tension V présente en sortie de la même dite cellule.

$$V = f * Ve/2 \text{ avec } -1 \leq f \leq 1$$

Dans chaque étage élémentaire du premier étage, on configure et on commande les deux cellules de type NPC de manière à ce que leurs fonctions de conversion associées soient égales deux à deux. De la sorte, les tensions appliquées en entrée de chacune des cellules du premier étage mais aussi du second étage sont égales à VDC/n+1. Toutes les cellules de type NPC ou à condensateur flottant du convertisseur doivent supporter cette tension VDC/n+1. Cela répond à l'objectif initial de réduction des contraintes de tension sur les interrupteurs à semi-conducteurs pour une tension continue donnée appliquée à l'étage élémentaire de rang n du premier étage.

On va décrire rapidement la structure d'une cellule de type NPC à trois niveaux de tension, en se référant aux figures 2A à 2D.

Cette cellule de type NPC comporte un quadruplet d'interrupteurs élémentaires montés en série dénommés K11, K12, K21, K22. Dans ce quadruplet, un premier interrupteur élémentaire K11 et un second interrupteur élémentaire K22 sont en position extrême et un premier interrupteur élémentaire K12 et un second interrupteur élémentaire K21 sont en position médiane, les deux interrupteurs élémentaires en position médiane sont directement reliés l'un à l'autre au noeud M3. Dans le quadruplet, un interrupteur élémentaire en position extrême est directement relié à un interrupteur élémentaire en position médiane. Cette liaison permet de définir un premier point milieu M1 entre le premier interrupteur élémentaire K11 en position extrême et le premier interrupteur élémentaire K12 en position médiane et un second point milieu M2 entre le second interrupteur élémentaire K22 en position extrême et le second interrupteur élémentaire K21 en position médiane.

Les interrupteurs élémentaires K11, K12, K21, K22, sont des interrupteurs à semi-conducteur et comportent chacun un commutateur électronique de puissance commandable T11, T12, T21, T22, tel un transistor de puissance IGBT (Insulated Gate Bipolar Transistor) associé avec une diode D11, D12, D21, D22, connectée en antiparallèle. Au lieu des transistors IGBT, d'autres commutateurs électroniques de puissance tels des transistors MOSFET ou autres sont envisageables. Pour ne pas surcharger les figures, on a omis de représenter les moyens de commande des commutateurs électroniques de puissance.

Une première diode D100 et une seconde diode D200 en série sont connectées entre le premier point milieu M1 et le second point milieu M2. La diode D100 a sa cathode connectée au premier point milieu M1, la diode D200 a son anode connectée au second point milieu M2. Un pont diviseur capacitif, avec un premier dispositif de stockage d'énergie C100 et un second dispositif de stockage d'énergie C200 est connecté aux bornes extrêmes du quadruplet d'interrupteurs élémentaires K11, K12, K21, K22. Les deux dispositifs de stockage d'énergie C100 et C200 ont une même capacité de stockage de l'énergie électrique. Le point milieu A entre les deux dispositifs de stockage d'énergie C100, C200 en série est relié au point milieu B entre les deux diodes D100, D200 en série. La diode D100 a son anode connectée au point milieu B, la diode D200 a sa cathode connectée au point milieu B.

On définit deux fonctions de commutation. La première fonction de commutation F1 est utilisée pour la commande d'une première cellule de commutation élémentaire G1 comprenant le premier interrupteur élémentaire K11 en position extrême et le second interrupteur élémentaire K21 en position médiane. La seconde fonction de commutation F2 est utilisée pour la commande d'une seconde cellule de commutation élémentaire G2 comprenant le premier interrupteur élémentaire K12 en position médiane et le second interrupteur élémentaire K22 en position extrême. Les interrupteurs élémentaires d'une même cellule de commutation élémentaire G1 ou G2 ne sont pas connectés directement l'un à l'autre et sont toujours dans des états complémentaires, l'un étant passant et l'autre bloqué.

La première tension d'entrée V1 s'applique aux bornes du premier dispositif de stockage d'énergie C100. La seconde tension d'entrée V2 s'applique aux bornes du second dispositif de stockage d'énergie C200.

La tension de sortie V est prise entre le point milieu A entre les deux dispositifs de stockage d'énergie C100, C200 et le noeud M3 commun aux deux interrupteurs élémentaires K12, K21 en position médiane.

| Etat | K11 | K21 | F1 G1 | K12 | K22 | F2 G2 | V |
|------|-----|-----|-------|-----|-----|-------|-----|
| 1 | passant | bloqué | 1 | passant | bloqué | 1 | V1 |
| 2 | bloqué | passant | 0 | passant | bloqué | 1 | 0 |
| 3 | bloqué | passant | 0 | bloqué | passant | 0 | -V2 |

La combinaison K12 bloqué et K11 passant n'est pas autorisée dans ce montage délivrant trois niveaux de tension. L'état 1 est illustré sur la figure 2B, l'état 2 est illustré sur la figure 2C, l'état 3 est illustré sur la figure 2D.

On va décrire rapidement la structure d'une cellule de type à condensateur flottant à trois niveaux de tension, en se référant aux figures 3A à 3E.

Cette cellule de type à condensateur flottant comporte un quadruplet d'interrupteurs élémentaires montés en série dénommés K110, K120, K210, K220. Dans ce quadruplet, un premier interrupteur élémentaire K110 et un second interrupteur élémentaire K220 sont en position extrême et un premier interrupteur élémentaire K120 et un second interrupteur élémentaire K210 sont en position médiane, les deux interrupteurs élémentaires K120, K210 en position médiane sont directement reliés l'un à l'autre au noeud M30. Dans le quadruplet, un interrupteur élémentaire en position extrême est directement relié à un interrupteur élémentaire en position médiane. Cette liaison permet de définir un premier point milieu M10 entre le premier interrupteur élémentaire K110 en position extrême et le premier interrupteur élémentaire K120 en position médiane et un second point milieu M20 entre le second interrupteur élémentaire K220 en position extrême et le second interrupteur élémentaire K210 en position médiane.

Ces interrupteurs élémentaires K110, K120, K210, K220 sont des interrupteurs à semi-conducteur et comportent chacun un commutateur électronique de puissance commandable T110, T120, T210, T220, tel un transistor de puissance IGBT (Insulated Gate Bipolar Transistor) par exemple associé avec une diode D110, D120, D210, D220, connectée en antiparallèle. Au lieu des transistors IGBT, d'autres commutateurs électroniques de puissance tels des transistors MOSFET ou autres sont envisageables.

Un dispositif de stockage d'énergie C101 est connecté entre le premier point milieu M10 et le second point milieu M20.

On définit deux fonctions de commutation. La première fonction de commutation F10 est utilisée pour la commande d'une première cellule de commutation élémentaire J1 comprenant le premier interrupteur élémentaire K110 en position extrême et le second interrupteur élémentaire en position extrême K220. La seconde fonction de commutation F20 est utilisée pour la commande d'une seconde cellule de commutation élémentaire J2 comprenant le premier interrupteur élémentaire K120 en position médiane et le second interrupteur élémentaire K210 en position médiane. Les interrupteurs élémentaires d'une même cellule de commutation élémentaire sont toujours dans des états complémentaires, passant ou bloqué.

La tension d'entrée Ve est la tension aux bornes du quadruplet d'interrupteurs K110, K120, K210, K220. La tension de sortie V est la tension aux bornes de l'ensemble formé par le second interrupteur élémentaire K210 en position intermédiaire et le second interrupteur élémentaire K220 en position extrême.

| Etat | K110 | K220 | F10 J1 | K120 | K210 | F20 J2 | V |
|------|------|------|--------|------|------|--------|------|
| 1 | passant | bloqué | 1 | passant | bloqué | 1 | Ve |
| 2 | passant | bloqué | 1 | bloqué | passant | 0 | Ve/2 |
| 3 | bloqué | passant | 0 | passant | bloqué | 1 | Ve/2 |
| 4 | bloqué | passant | 0 | bloqué | passant | 0 | 0 |

Selon l'état des interrupteurs élémentaires, les trois niveaux de tension de sortie qui peuvent être obtenus sont : 0, Ve/2, Ve. L'état 1 est illustré sur la figure 3B, l'état 2 est illustré sur la figure 3C, l'état 3 est illustré sur la figure 3D et l'état 4 est illustré sur la figure 3E.

Les interrupteurs élémentaires des cellules décrites plus haut sont bidirectionnels en courant, ce qui rend le convertisseur objet de l'invention réversible.

On s'intéresse maintenant aux figures 4A, 4B qui montrent de manière plus détaillée le schéma électrique d'un bras d'un convertisseur multi-niveaux objet de l'invention. Sur la figure 4A le convertisseur objet de l'invention fonctionne en onduleur DC/AC. Sa sortie côté alternatif est destinée à alimenter une charge 10 représentée formée d'une résistance R et d'une inductance L en série et équivalente à une source de courant. Sur la figure 4B, le convertisseur objet de l'invention fonctionne en redresseur AC/DC. Les dispositifs de stockage d'énergie ont été appelés condensateurs. Cela n'est pas limitatif.

Dans cet exemple le premier étage Et1 du bras ne comporte que n=2 étages élémentaires E11, E12 de rangs 1 et 2. Le premier étage élémentaire E11 comporte deux cellules de type NPC Ce11 et Ce12. La cellule de type NPC Ce11 comporte quatre interrupteurs élémentaires dont deux extrêmes T4u, T3'u et deux médians T3u, T4u' ainsi que deux condensateurs C7, C8 et deux diodes D7, D8. Ces composants sont agencés comme sur la figure 2A.

Les interrupteurs élémentaires de la cellule de type NPC Ce11 se répartissent en deux cellules de commutation élémentaires Gr4 avec T4u et T4'u et Gr3 avec T3u et T3'u. Ainsi la cellule de commutation élémentaire Gr4 a un niveau 0 lorsque T4u est bloqué et T4'u est passant et un niveau 1 lorsque T4u est passant et T4'u est bloqué. De même la cellule de commutation élémentaire Gr3 a un niveau 0 lorsque T3u est bloqué et T3'u est passant et un niveau 1 lorsque T3u est passant et T3'u est bloqué.

De manière similaire, la cellule de type NPC Ce12 comporte quatre interrupteurs élémentaires dont deux extrêmes T4l, T3'l et deux médians T3l, T4'l ainsi que deux condensateurs C9, C10 et deux diodes D9, D10. Ces composants sont agencés comme sur la figure 2A.

Le second étage élémentaire E12 comporte deux cellules de type NPC Ce21 et Ce22 et une cellule capacitive Ca2(1) formée d'une paire de condensateurs en série C3 et C4. La cellule de type NPC Ce21 comporte quatre interrupteurs élémentaires dont deux extrêmes T6u, T5'u et deux médians T5u, T6'u, deux condensateurs C1, C2 et deux diodes D1, D2. Ces composants sont agencés comme sur la figure 2A.

Les interrupteurs élémentaires de la cellule de type NPC Ce21 se répartissent en deux cellules de commutation élémentaires Gr5 avec T5u et T5'u et Gr6 avec T6u et T6'u. Ainsi la cellule de commutation élémentaire Gr5 a un niveau 0 lorsque T5u est bloqué et T5'u est passant et un niveau 1 lorsque T5u est passant et T5'u est bloqué. Ainsi la cellule de commutation élémentaire Gr6 a un niveau 0 lorsque T6u est bloqué et T6'u est passant et un niveau 1 lorsque T6u est passant et T6'u est bloqué. Les cellules de commutation élémentaires appartenant à des cellules NPC d'un même étage élémentaire ont une même fonction de conversion.

De manière similaire, la cellule de type NPC Ce22 comporte quatre interrupteurs élémentaires dont deux extrêmes T6l, T5'l et deux médians T5l, T6'l, deux condensateurs C5, C6 et deux diodes D5, D6.

Afin de respecter les contraintes énoncées précédemment, dans un même étage élémentaire, les commandes des interrupteurs élémentaires homologues T3u et T3l ; T4u et T4l ; T5u et T5l ; T6u et T6l sont identiques. Par interrupteurs élémentaires homologues, on entend deux interrupteurs élémentaires appartenant chacun à une cellule de type NPC différente du même étage élémentaire et occupant exactement la même position dans ladite cellule.

Le premier étage élémentaire E11 et le second étage élémentaire E12 sont reliés entre eux par les deux inductances Laux11, Laux21.

Le second étage Et2 comporte une cellule de type à condensateur flottant Ce10 telle qu'illustrée sur la figure 2B. La cellule Ce10 comporte quatre interrupteurs élémentaires dont deux extrêmes T2, T2' et deux médians T1, T1' ainsi qu'un condensateur Cf. Ces interrupteurs élémentaires se répartissent en deux cellules de commutation élémentaires Gr1 avec T1 et T1' et Gr2 avec T2 et T2'. Ainsi la cellule de commutation élémentaire Gr1 a un niveau 0 lorsque T1 est bloqué et T1' est passant et un niveau 1 lorsque T1 est passant et T1' est bloqué. Ainsi la cellule de commutation élémentaire Gr2 a un niveau 0 lorsque T2 est bloqué et T2' est passant et un niveau 1 lorsque T2 est passant et T2' est bloqué.

Le dimensionnement du condensateur Cf de la cellule de type à condensateur flottant ne répond pas aux mêmes règles que celles des condensateurs des cellules de type NPC. Par contre, la tenue en tension de tous ces condensateurs du convertisseur est la même. Pour simplifier, la valeur du condensateur Cf de la cellule à condensateur imbriqué dépend de la fréquence de commutation des interrupteurs élémentaires de ladite cellule. La valeur des condensateurs d'une cellule de type NPC est guidée par la fréquence du signal de sortie de ladite cellule.

On a représenté une charge 10 de type R, L à brancher entre le noeud S et le noeud N3. Le noeud S est localisé au point commun entre les deux interrupteurs élémentaires médians T1, T1' de la cellule de type à condensateur flottant Ce10. Dans l'exemple de la figure 4A, ce noeud S correspond à la sortie du bras B dans un fonctionnement de convertisseur DC/AC. Le noeud N3 est localisé au point commun entre les deux condensateurs C3, C4 de la paire de condensateurs de la cellule capacitive Ca2(1). Ce noeud N3 correspond au point milieu de la source de tension d'entrée VDC.

On ne va pas décrire plus en détail le bras de convertisseur de la figure 4B. Il a la même structure que celui de la figure 4A à l'exception du fait que le noeud S qui correspondait à la sortie sur la figure 4A s'appelle maintenant noeud E puisqu'il correspond maintenant à l'entrée. Il est destiné à être connecté à une source de courant alternative (non représentée). De même les bornes d'entrée E+, E- sur la figure 4A aux bornes desquelles la source de tension VDC est à brancher s'appellent maintenant S+ et S- sur la figure 4B, elles correspondent à la sortie du convertisseur et sont destinées à alimenter une source de tension continue (non représentée). En fonctionnement redresseur, un courant IE circule du noeud E vers les bornes de sortie S+ et S- alors qu'en fonctionnement onduleur des courants IE+ et IE- circulait des bornes E+, E- vers le noeud S. En fonctionnement redresseur des courants IS+ et IS- apparaissant aux bornes S+ et S-sont des courants de sortie, et en fonctionnement onduleur le courant de sortie appelé Is apparait au noeud S.

Le convertisseur de la figure 4A permet d'obtenir en sortie 7 niveaux de tension différents 0, VDC/6, 2VDC/6, 3VDC/6, 4VDC/6, 5VDC/6, VDC et 36 états en fonction du niveau des cellules de commutation élémentaires Gr1 à Gr6, c'est à dire de l'état passant ou bloqué de leurs interrupteurs élémentaires.

On a regroupé dans le tableau suivant les 36 états différents et autorisés ainsi que les niveaux de tension V correspondants en sortie du second étage Et2. La tension V est prise entre le noeud S et la borne E-.

Le contenu harmonique de la tension de sortie est notablement réduit.

| Etat | Gr6 | Gr5 | Gr4 | Gr3 | Gr2 | Gr1 | V |
|------|-----|-----|-----|-----|-----|-----|---|
| 1 | 0 | 0 | 0 | 0 | 0 | 0 | 0 |
| 2 | 0 | 0 | 0 | 0 | 0 | 1 | VDC/6 |
| 3 | 0 | 0 | 0 | 0 | 1 | 0 | VDC/6 |
| 4 | 0 | 0 | 0 | 0 | 1 | 1 | 2VDC/6 |
| 5 | 0 | 0 | 0 | 1 | 0 | 0 | VDC/6 |
| 6 | 0 | 0 | 0 | 1 | 0 | 1 | 2VDC/6 |
| 7 | 0 | 0 | 0 | 1 | 1 | 0 | 2VDC/6 |
| 8 | 0 | 0 | 0 | 1 | 1 | 1 | 3VDC/6 |
| 9 | 0 | 0 | 1 | 1 | 0 | 0 | 2VDC/6 |
| 10 | 0 | 0 | 1 | 1 | 0 | 1 | 3VDC/6 |
| 11 | 0 | 0 | 1 | 1 | 1 | 0 | 3VDC/6 |
| 12 | 0 | 0 | 1 | 1 | 1 | 1 | 4VDC/6 |
| 13 | 0 | 1 | 0 | 0 | 0 | 0 | VDC/6 |
| 14 | 0 | 1 | 0 | 0 | 0 | 1 | 2VDC/6 |
| 15 | 0 | 1 | 0 | 0 | 1 | 0 | 2VDC/6 |
| 16 | 0 | 1 | 0 | 0 | 1 | 1 | 3VDC/6 |
| 17 | 0 | 1 | 0 | 1 | 0 | 0 | 2VDC/6 |
| 18 | 0 | 1 | 0 | 1 | 0 | 1 | 3VDC/6 |
| 19 | 0 | 1 | 0 | 1 | 1 | 0 | 3VDC/6 |
| 20 | 0 | 1 | 0 | 1 | 1 | 1 | 4VDC/6 |
| 21 | 0 | 1 | 1 | 1 | 0 | 0 | 3VDC/6 |
| 22 | 0 | 1 | 1 | 1 | 0 | 1 | 4VDC/6 |
| 23 | 0 | 1 | 1 | 1 | 1 | 0 | 4VDC/6 |
| 24 | 0 | 1 | 1 | 1 | 1 | 1 | 5VDC/6 |
| 25 | 1 | 1 | 0 | 0 | 0 | 0 | 2VDC/6 |
| 26 | 1 | 1 | 0 | 0 | 0 | 1 | 3VDC/6 |

(suite)

| Etat | Gr6 | Gr5 | Gr4 | Gr3 | Gr2 | Gr1 | V |
|---|---|---|---|---|---|---|---|
| 27 | 1 | 1 | 0 | 0 | 1 | 0 | 3VDC/6 |
| 28 | 1 | 1 | 0 | 0 | 1 | 1 | 4VDC/6 |
| 29 | 1 | 1 | 0 | 1 | 0 | 0 | 3VDC/6 |
| 30 | 1 | 1 | 0 | 1 | 0 | 1 | 4VDC/6 |
| 31 | 1 | 1 | 0 | 1 | 1 | 0 | 4VDC/6 |
| 32 | 1 | 1 | 0 | 1 | 1 | 1 | 5VDC/6 |
| 33 | 1 | 1 | 1 | 1 | 0 | 0 | 4VDC/6 |
| 34 | 1 | 1 | 1 | 1 | 0 | 1 | 5VDC/6 |
| 35 | 1 | 1 | 1 | 1 | 1 | 0 | 5VDC/6 |
| 36 | 1 | 1 | 1 | 1 | 1 | 1 | VDC |

En analysant ce tableau, on s'aperçoit que plusieurs états et donc plusieurs configurations des interrupteurs élémentaires conduisent à une même tension V. Toutefois, ces états redondants peuvent générer des effets différents sur les dispositifs de stockage d'énergie du convertisseur. Ainsi dans l'état 2, le courant vise à décharger le condensateur Cf de la cellule de type à condensateur flottant Ce10, alors que dans l'état 3, le courant circule dans le sens opposé, ce qui conduit à la charge du condensateur Cf.

Plusieurs types de commande peuvent être utilisés pour rendre passants ou bloqués les interrupteurs élémentaires et donc assurer la conversion. Une commande traditionnelle basée sur la modulation de largeur d'impulsion MLI peut être utilisée. Bien sûr, on commande de la même manière les interrupteurs élémentaires homologues des deux cellules de type NPC d'un même étage élémentaire du premier étage.

On se réfère aux figures 5A à 5D qui montrent des porteuses triangulaires utilisées pour définir les instants de commutation des interrupteurs élémentaires respectivement des deux cellules de type NPC et de type à condensateur flottant du convertisseur objet de l'invention. Plus particulièrement les figure 5A et 5B concernent, respectivement, la commande des interrupteurs élémentaires des deux cellules de commutation élémentaires d'une cellule de type à condensateur flottant comme la cellule Ce10. Les porteuses triangulaires ont une amplitude comprise entre +1 et -1. Elles sont déphasées d'une demi-période de découpage. Par exemple, la porteuse triangulaire de la figure 5A est associée à la première cellule de commutation élémentaire Gr1 et la porteuse triangulaire de la figure 5B est associée à la deuxième cellule de commutation élémentaire Gr2.

Les figures 5C et 5D concernent respectivement la commande des deux cellules de commutation élémentaires d'une cellule de type NPC comme les cellules de type NPC Ce11, Ce12 par exemple. Les porteuses triangulaires ont une amplitude comprise entre 0 et +1 (figure 5C) pour la première cellule de commutation élémentaire Gr3 et entre -1 et 0 (figure 5D) pour la deuxième cellule de commutation élémentaire Gr4. Elles sont en phase. Les instants de commutation des interrupteurs élémentaires sont obtenus par comparaison entre les porteuses triangulaires et un signal de consigne, correspondant au signal souhaité en sortie du convertisseur. On peut définir comme règle, par exemple, qu'un instant de commutation d'un interrupteur élémentaire survient dès que le signal de consigne est strictement supérieur à la porteuse triangulaire. On aurait pu bien sûr fixer comme règle qu'un instant de commutation d'un interrupteur élémentaire survient dès que le signal de consigne est supérieur ou égal à la porteuse triangulaire.

Le signal de consigne est illustré sur la figure 5E.

D'autres types de commande sont bien sûr envisageables comme par exemple une commande vectorielle ou une commande directe du couple lorsque le convertisseur alimente une machine tournante.

Un mode de commande original est proposé en se référant aux figures 6 à 9. On limite à un le nombre de mise à l'état passant des interrupteurs élémentaires des cellules de type NPC des étages élémentaires du premier étage pendant une période du signal de consigne Vref. On obtient un réglage grossier de la tension de sortie dudit étage élémentaire.

En utilisant pour commander les interrupteurs élémentaires du second étage du convertisseur une fréquence de commutation supérieure à celle utilisée pour commander les interrupteurs du premier étage, on obtient un réglage beaucoup plus fin de la tension de sortie du convertisseur, tout en respectant les contraintes de fonctionnement de chacun des interrupteurs élémentaires. On rappelle que la fréquence de commutation des interrupteurs élémentaires est liée à leur technologie et à leur calibre. Dans cette application, elle peut par exemple être comprise entre 500Hz et 10000 Hz. La fréquence du signal en sortie du convertisseur illustré à la figure 4A peut varier entre 0 et 150 Hz.

La figure 6.00 illustre l'allure du signal de consigne encore appelée tension de consigne Vref qui va servir notamment pour déterminer les instants de commutation de tous les interrupteurs élémentaires des cellules de type NPC et à condensateur flottant. Elle va être utilisée dans plusieurs comparaisons, comme on le verra ultérieurement. Elle est en phase avec la tension Vs aux bornes de la charge 10 branchée en sortie du bras B, illustrée à la figure 9.1, par contre le courant de sortie Is de la figure 9.2 est lui en retard sur la tension de consigne. Elle a une amplitude comprise entre -0,8 et +0,8 dans l'exemple décrit. Plus généralement la tension de consigne Vref peut varier entre -1 et +1. L'amplitude de cette tension de consigne Vref est utilisée pour régler l'amplitude de la tension de sortie Vs.

La figure 6.01 est un chronogramme de la porteuse Car3 utilisée avec la tension de consigne Vref pour déterminer les instants de commutation des interrupteurs élémentaires T4u et T3u de la cellule de type NPC Ce11 du premier étage élémentaire E11 du convertisseur. C'est un signal en créneaux en phase avec la tension de consigne Vref et dont l'amplitude est Vref/3.

La figure 6.1 est un chronogramme du signal de commande de l'interrupteur élémentaire T3u de la cellule de type NPC Ce11 du premier étage élémentaire E11 du convertisseur. C'est un signal en créneaux dont la période est égale à celle du signal de consigne Vref. L'interrupteur élémentaire T3u n'est bloqué qu'une seule fois pendant cette période, tant que l'amplitude de la tension de référence Vref est inférieure au palier négatif de la porteuse Car3.

La figure 6.2 est un chronogramme du signal de commande de l'interrupteur élémentaire T4u de la cellule de type NPC Ce11 du premier étage élémentaire E11 du convertisseur. C'est un signal en créneaux dont la période est égale à celle du signal de consigne Vref. L'interrupteur élémentaire T4u n'est passant qu'une seule fois pendant cette période, tant que la tension de consigne Vref est supérieure au palier positif de la porteuse Car3.

Les interrupteurs élémentaires T3u et T4u sont des interrupteurs élémentaires en position médiane et extrême directement connectés, ils peuvent avoir le même état comme le montre le tableau précédent. Cela se vérifie deux fois durant une période.

La figure 6.3 illustre un chronogramme du courant IN8 circulant du noeud N8 vers l'interrupteur élémentaire T4u. Le noeud N8 est commun à l'inductance Laux11 et à l'interrupteur élémentaire T4u.

La figure 6.4 illustre un chronogramme du courant IN9 circulant du noeud N9 vers les diodes D7 et D8. Le noeud N9 est commun à aux condensateurs C7, C8 et aux diodes D7 et D8.

La figure 6.5 illustre un chronogramme du courant IN10 circulant du noeud N10 vers les interrupteurs élémentaires T3'u et T4l. Le noeud N10 est commun aux condensateurs C8, C9 et aux interrupteurs élémentaires T3'u et T4l.

La figure 6.6 illustre un chronogramme du courant IN11 circulant du noeud N11 vers les diodes D9 et D10. Le noeud N11 est commun aux condensateurs C9, C10 et aux diodes D9 et D10.

La figure 6.7 illustre un chronogramme du courant IN12 circulant du noeud N12 vers l'interrupteur élémentaire T3'l. Le noeud N12 est commun à l'inductance Laux21 et à l'interrupteur élémentaire T3'l.

La figure 6.8 illustre un chronogramme du courant de sortie Is du bras de convertisseur illustré sur la figure 4A. Les chronogrammes des figures 6.3 à 6.7 représentent des portions du courant Is illustré à la figure 6.8.

La figure 6.02 est un chronogramme de la porteuse Car4 utilisée avec la tension de consigne Vref de la figure 6.00 pour déterminer les instants de commutation des interrupteurs élémentaires T6u et T5u de la cellule de type NPC Ce21 du second étage élémentaire E12 du convertisseur. C'est un signal en créneaux en phase avec la tension de consigne Vref et dont l'amplitude est 2Vref/3. On a superposé sur ce chronogramme, en gras, la tension de consigne Vref.

La figure 7.1 est un chronogramme du signal de commande de l'interrupteur élémentaire T5u de la cellule de type NPC Ce21 du second étage élémentaire E12 du convertisseur. C'est un signal en créneaux dont la période est égale à celle du signal de consigne Vref. L'interrupteur élémentaire T5u n'est bloqué qu'une seule fois pendant cette période, tant que l'amplitude de la tension de consigne Vref est inférieure au palier négatif de la porteuse Car4.

La figure 7.2 est un chronogramme du signal de commande de l'interrupteur élémentaire T6u de la cellule de type NPC Ce21 du second étage élémentaire E12 du convertisseur. C'est un signal en créneaux dont la période est égale à celle du signal de consigne Vref. L'interrupteur élémentaire T6u n'est passant qu'une seule fois pendant cette période, tant que l'amplitude de la tension de consigne Vref est supérieure au palier positif de la porteuse Car4.

Les interrupteurs élémentaires T6u et T5u sont des interrupteurs élémentaires en position médiane et extrême directement connectés, ils peuvent avoir le même état comme le montre le tableau précédent. Cela se vérifie deux fois durant une période.

La figure 7.3 illustre un chronogramme du courant IE+ circulant de la borne E+, devant être connectée à la source de tension VDC, vers l'interrupteur élémentaire T6u.

La figure 7.4 illustre un chronogramme du courant IN1 circulant du noeud N1 vers les diodes D1 et D2. Le noeud N1 est commun aux condensateurs C1, C2 et aux diodes D1 et D2.

La figure 7.5 illustre un chronogramme du courant IN2 circulant du noeud N2 vers l'interrupteur élémentaire T5'u. Le noeud N2 est commun aux condensateurs C2, C3 et à l'interrupteur élémentaire T5'u.

La figure 7.6 illustre un chronogramme du courant IN4 circulant du noeud N4 vers l'interrupteur élémentaire T6l. Le noeud N4 est commun aux condensateurs C4, C5 et à l'interrupteur élémentaire T6l.

La figure 7.7 illustre un chronogramme du courant IN5 circulant du noeud N5 vers les diodes D5 et D6. Le noeud N5 est commun à aux condensateurs C5, C6 et aux diodes D5 et D6.

La figure 7.8 illustre un chronogramme du courant IE- circulant de la borne E-, devant être connectée à la source de tension VDC, vers l'interrupteur élémentaire T5'l.

La figure 7.9 illustre un chronogramme du courant de sortie Is du bras de convertisseur illustré à la figure 4A.

La figure 6.03 est un chronogramme de la porteuse Car1 utilisée avec la tension de consigne Vref pour déterminer les instants de commutation de l'interrupteur élémentaire T1 de la cellule de type à condensateur flottant Ce10 du second étage E2 du convertisseur. C'est un signal triangulaire d'amplitude comprise entre +1 et -1. La tension de consigne Vref est superposée à la porteuse Car1.

La figure 6.04 est un chronogramme de la porteuse Car2 utilisée avec la tension de consigne Vref pour déterminer les instants de commutation de l'interrupteur élémentaire T2 de la cellule de type à condensateur flottant Ce10 du second étage E2 du convertisseur. C'est un signal triangulaire d'amplitude comprise entre +1 et -1 de même fréquence mais en opposition de phase par rapport à la porteuse Car 1 de la figure 6.03. La tension de consigne Vref est superposée à la porteuse Car2.

La figure 8.1 illustre un chronogramme du signal de commande de l'interrupteur élémentaire T1 de la cellule Ce10 de type à condensateur flottant du second étage Et2. Cet interrupteur élémentaire T1 est passant tant que la tension de consigne Vref est supérieure à Car1.

La figure 8.2 illustre un chronogramme du signal de commande de l'interrupteur élémentaire T2 de la cellule Ce10 de type à condensateur flottant du second étage Et2. Cet interrupteur élémentaire T2 est passant tant que la tension de consigne Vref est supérieure à Car2.

Ces deux signaux de commande sont des signaux en créneaux à la fréquence des porteuses Car 1 et Car2. Cette fréquence est bien plus élevée que celle des signaux de commande des interrupteurs élémentaires T4u, T3u, T6u, T5u du premier étage illustrés aux figures 6.1, 6.2, 7.1, 7.2 qui sont à la fréquence du courant de sortie Is.

La figure 8.3 illustre un chronogramme du courant IT1 circulant depuis l'interrupteur élémentaire T2 vers l'interrupteur élémentaire T1.

La figure 8.4 illustre un chronogramme du courant ICf circulant depuis l'interrupteur élémentaire T2 vers le condensateur Cf.

La figure 8.5 illustre un chronogramme du courant de sortie Is du bras de convertisseur illustré à la figure 4A. Ces trois derniers chronogrammes sont à comparer avec les chronogrammes des figures 8.6 et 8.7 qui sont des chronogrammes des commandes de l'interrupteur élémentaire T1 et de l'interrupteur élémentaire T2. Les chronogrammes des figures 8.3 à 8.7 ont la même base de temps. Les bases de temps des chronogrammes des figures 6.03, 6.04 8.1, 8.2 ont été dilatées pour rendre plus visibles les instants de commutation des interrupteurs élémentaires.

La figure 9.1 illustre un chronogramme de la tension aux bornes de la charge 10 branchée en sortie du bras de convertisseur illustré à la figure 4A, la sortie se faisant au noeud S commun aux interrupteurs élémentaires T1 et T1' de la cellule Ce10.

La figure 9.2 illustre un chronogramme du courant de sortie Is circulant dans la charge 10 branchée en sortie du bras de convertisseur illustré à la figure 4A.

On peut remarquer que la tension illustrée sur la figure 9.1 est centrée sur 0V, et son amplitude va de -3000V à +3000V. Les sept niveaux de tension sont bien visibles. La tension varie par paliers de 1000V. Les valeurs mentionnées dans le tableau précédent sont toutes positives, il y a un décalage de VDC/2 entre ces grandeurs. Pour la simulation à partir de laquelle les chronogrammes sont issus, la résistance de la charge 10 vaut 10 ohms, l'inductance vaut 300mH, ce qui conduit à un courant maximum de 30A pour une valeur efficace de 20A.

En se référant à la figure 10, on a représenté un variateur de vitesse qui comporte en cascade un convertisseur 1 objet de l'invention fonctionnant en redresseur AC/DC et un convertisseur 2 objet de l'invention fonctionnant en onduleur DC/AC en plaçant entre les deux, côté continu une source de tension 3 telle un dispositif de stockage d'énergie. Le redresseur 1 est destiné à être connecté en entrée à un réseau d'alimentation électrique alternatif Re assimilable à une source de courant. L'onduleur 2 est destiné à être connecté en sortie à un dispositif utilisateur assimilable à une source de courant telle un moteur à courant alternatif M. La figure 10, illustre un exemple où les deux convertisseurs 1 et 2 sont triphasés. Ils comporteraient chacun trois bras tels que ceux représentés aux figures 4A, 4B.

Le convertisseur multi-niveaux objet de l'invention est bien plus compact et léger que les convertisseurs de l'art antérieur avec transformateur. Il est beaucoup plus facile à installer et à transporter. Il peut être utilisé avec ou sans transformateur d'isolement. Son raccordement direct au réseau alternatif est possible en fonctionnement redresseur AC/DC. Il permet de minimiser la pollution harmonique du réseau électrique et la correction du facteur de puissance en l'associant à un redresseur actif régénératif. Le convertisseur objet de l'invention est compatible avec le réseau alternatif jusqu'à 13,8 kV, qu'il fonctionne en onduleur ou redresseur. De ce fait, il n'est pas obligatoire d'utiliser un transformateur d'adaptation de niveau de tension, solution classiquement utilisée.

Le convertisseur DC/AC objet de l'invention peut être utilisé pour alimenter des parcs de moteurs asynchrones ou synchrones qu'ils soient neufs ou existants.

Le convertisseur objet de l'invention a une structure modulaire grâce à l'emploi des cellules de type NPC et à condensateur flottant et des cellules capacitives. Il en résulte que les dépenses de maintenance sont réduites et que la fiabilité est bonne.

La forme d'onde d'alimentation de la charge est de bonne qualité et les surtensions côté source de courant sont limitées et ne sont liées qu'aux câbles de liaisons.

Le bus continu commun peut servir pour alimenter plusieurs convertisseurs objet de l'invention.

Un autre avantage du convertisseur objet de l'invention est qu'il n'a pas une limite de fonctionnement basse fréquence comme c'est le cas pour les convertisseurs de topologie MMC (Modular Multi-level Converter ou convertisseur multi-niveau modulaire) utilisés dans des transmissions dans les réseaux d'énergie haute tension.

## Revendications

1. Convertisseur multi-niveaux comportant un ou plusieurs bras (B), configurés pour être connectés chacun entre une source de tension (VDC) et une source de courant (I),

   dans lequel le ou chaque bras comprend deux étages (Et1, Et2) connectés en cascade avec un premier étage (Et1) destiné à être connecté à la source de tension (VDC), un second étage (Et2) destiné à être connecté à la source de courant (I),

   dans lequel le premier étage (Et1) comporte n étages élémentaires (E11,..., E1n) de rang un à n (n supérieur à un) connectés en cascade, l'étage élémentaire (E11) de rang un étant connecté au second étage (Et2) et l'étage élémentaire (E1n) de rang n étant destiné à être connecté à la source de tension (VDC), **caractérisé en ce que** chaque étage élémentaire (E11, E1n) comporte une paire de cellules de type NPC (neutral point clamped ou clampage par le neutre) (Ce11, Ce12 ; Cen1, Cen2) identiques connectées en série, la connexion serie étant directe dans l'étage élémentaire (E1) de rang 1, la connexion serie se faisant via n-1 cellules capacitives (Can(1), Can(n-1)) pour chaque étage élémentaire de rang n (n supérieur à un), le second étage (Et2) comportant une cellule de type à condensateur flottant (Ce10).

2. Convertisseur multi-niveaux selon la revendication 1, dans lequel une cellule capacitive (Ca2(1)) comporte deux dispositifs de stockage d'énergie (C3, C4) agencés en série, ces dispositifs de stockage d'énergie ayant une même capacité de stockage d'énergie.

3. Convertisseur multi-niveaux selon la revendication 2, dans lequel dans un étage élémentaire, les cellules de type NPC (Ce21, Ce22) comportent un pont capacitif à deux dispositifs de stockage d'énergie (C1, C2 : C5, C6) ayant une même capacité de stockage d'énergie, et dans lequel chaque dispositif de stockage d'énergie d'une cellule capacitive de cet étage élémentaire a une même capacité de stockage d'énergie qu'un des dispositifs de stockage d'énergie d'une cellule de type NPC .

4. Convertisseur multi-niveaux selon la revendication 3, dans lequel tous les dispositifs de stockage d'énergie (C1-C10) du premier étage (Et1) ont une même capacité de stockage d'énergie.

5. Convertisseur multi-niveaux selon l'une des revendications 1 à 4, dans lequel au moins une des cellules de type NPC (Ce21) d'un étage élémentaire (E12) est connectée à une cellule de type NPC (Ce11) d'un étage élémentaire voisin (E11) via une inductance (Laux11).

6. Convertisseur multi-niveaux selon l'une des revendications 1 à 5, dans lequel une cellule de type NPC comporte un quadruplet d'interrupteurs élémentaires (K11, K12, K21, K22) agencés en série parmi lesquels deux sont en position extrême et deux sont en position médiane, dans lequel un interrupteur élémentaire (K11, K22) en position extrême et un interrupteur élémentaire (K21, K12) en position médiane qui ne sont pas reliés directement sont toujours dans des états complémentaires, l'un étant passant et l'autre étant bloqué, ces deux interrupteurs élémentaires (K11, K21 ; K12, K22) formant une cellule de commutation élémentaire.

7. Convertisseur multi-niveaux selon la revendication 6, dans lequel chaque cellule de type NPC (Ce21, Ce22) possède une fonction de conversion qui lie la tension appliquée en entrée de ladite cellule à la tension présente en sortie de ladite cellule et les deux cellules de commutation élémentaires de ladite cellule possèdent également une fonction de conversion.

8. Convertisseur multi-niveaux selon la revendication 7, dans lequel les cellules de type NPC (Ce21, Ce22) d'un même étage élémentaire (E11) ont une même fonction de conversion

9. Convertisseur multi-niveaux selon l'une des revendications 1 à 8, dans lequel une cellule de commutation de type à condensateur flottant comporte un quadruplet d'interrupteurs élémentaires (K110, K120, K210, K220) agencés en série parmi lesquels deux sont en position extrême et deux sont en position médiane, et dans lequel les deux interrupteurs élémentaires (K110, K220) en position extrême sont toujours dans des états complémentaires et les deux interrupteurs élémentaires (K120, K210) en position médiane sont toujours dans des états complémentaires, l'un étant passant et l'autre étant bloqué.

10. Convertisseur multi-niveaux selon l'une des revendications 6 à 9, dans lequel dans les deux cellules de type NPC (Ce21, Ce22) d'un même étage élémentaire, les interrupteurs élémentaires (T6u, T6l) homologues sont commandés de manière identique.

11. Convertisseur multi-niveaux selon l'une des revendications 6 à 10, dans lequel les interrupteurs élémentaires (K11, K12) comportent chacun un commutateur électronique de puissance commandable (T11, T12) associé avec une diode (D11, D12) connectée en antiparallèle.

12. Convertisseur multi-niveaux selon l'une des revendications 2 à 11, dans lequel les dispositifs de stockage d'énergie (C1-C10, Cf) sont choisis parmi un condensateur, une batterie, une pile à combustible.

13. Variateur de vitesse comportant une cascade avec un convertisseur (1) selon l'une des revendications précédentes fonctionnant en redresseur AC/DC et un convertisseur (2) selon l'une des revendications précédentes fonctionnant en onduleur DC/AC, reliés entre eux par leurs côtés continu par l'intermédiaire une source de tension (3).

## Patentansprüche

1. Mehrpegelwandler mit einem oder mehreren Zweigen (B), die so konfiguriert sind, dass sie jeweils zwischen eine Spannungsquelle (VDC) und eine Stromquelle (I) geschaltet werden,
in dem der oder jeder Zweig zwei Stufen (Et1, Et2), die in Kaskade geschaltet sind, mit einer ersten Stufe (Et1), die mit der Spannungsquelle (VDC) verbunden werden soll, einer zweiten Stufe (Et2), die mit der Stromquelle (I) verbunden werden soll, umfasst,
in dem die erste Stufe (Et1) n Elementarstufen (E11, ..., E1 n) des Rangs eins bis n (wobei n größer ist als eins), die in Kaskade geschaltet sind, umfasst, wobei die Elementarstufe (E11) des Rangs eins mit der zweiten Stufe (Et2) verbunden ist und die Elementarstufe (E1 n) des Rangs n mit der Spannungsquelle (VDC) verbunden werden soll, **dadurch gekennzeichnet, dass** jede Elementarstufe (E11, E1n) ein Paar von identischen Zellen des Typs NPC (neutral point clamped oder auf den Neutralpunkt festgesetzt) (Ce11, Ce12; Cen1, Cen2) umfasst, die in Reihe geschaltet sind, wobei die Reihenschaltung in der Elementarstufe (E1) des Rangs 1 direkt ist, wobei die Reihenschaltung über n-1 kapazitive Zellen (Can(1), Can(n-1)) für jede Elementarstufe des Rangs n (wobei n größer ist als eins) erfolgt, wobei die zweite Stufe (Et2) eine Zelle des Typs mit schwebendem Kondensator (Ce10) umfasst.

2. Mehrpegelwandler nach Anspruch 1, in dem eine kapazitive Zelle (Ca2(1)) zwei Energiespeichervorrichtungen (C3, C4) umfasst, die in Reihe angeordnet sind, wobei diese Energiespeichervorrichtungen eine gleiche Energiespeicherkapazität aufweisen.

3. Mehrpegelwandler nach Anspruch 2, in dem in einer Elementarstufe die Zellen vom NPC-Typ (Ce21, Ce22) eine kapazitive Brücke mit zwei Energiespeichervorrichtungen (C1, C2; C5, C6) mit einer gleichen Energiespeicherkapazität umfassen, und in dem jede Energiespeichervorrichtung einer kapazitiven Zelle dieser Elementarstufe eine gleiche Energiespeicherkapazität wie eine der Energiespeichervorrichtungen einer Zelle vom NPC-Typ aufweist.

4. Mehrpegelwandler nach Anspruch 3, in dem alle Energiespeichervorrichtungen (C1-C10) der ersten Stufe (Et1) eine gleiche Energiespeicherkapazität aufweisen.

5. Mehrpegelwandler nach einem der Ansprüche 1 bis 4, in dem mindestens eine der Zellen vom NPC-Typ (Ce21) einer Elementarstufe (E12) mit einer Zelle vom NPC-Typ (Ce11) einer benachbarten Elementarstufe (E11) über eine Induktivität (Laux11) verbunden ist.

6. Mehrpegelwandler nach einem der Ansprüche 1 bis 5, in dem eine Zelle vom NPC-Typ ein Quadrupel von elementaren Schaltern (K11, K12, K21, K22) umfasst, die in Reihe angeordnet sind, von denen zwei sich in einer Endposition befinden und zwei sich in einer mittleren Position befinden, wobei ein elementarer Schalter (K11, K22) in der Endposition und ein elementarer Schalter (K21, K12) in der mittleren Position, die nicht direkt verbunden sind, sich immer in komplementären Zuständen befinden, wobei der eine leitend ist und der andere gesperrt ist, wobei diese zwei elementaren Schalter (K11, K21 ; K12, K22) eine elementare Umschaltzelle bilden.

7. Mehrpegelwandler nach Anspruch 6, in dem jede Zelle vom NPC-Typ (Ce21, Ce22) eine Umwandlungsfunktion besitzt, die die am Eingang der Zelle angelegte Spannung mit der Spannung verknüpft, die am Ausgang der Zelle vorhanden ist, und die zwei elementaren Umschaltzellen der Zelle auch eine Umwandlungsfunktion besitzen.

8. Mehrpegelwandler nach Anspruch 7, in dem die Zellen vom NPC-Typ (Ce21, Ce22) einer gleichen Elementarstufe (E11) eine gleiche Umwandlungsfunktion aufweisen.

9. Mehrpegelwandler nach einem der Ansprüche 1 bis 8, in dem eine Umschaltzelle vom Typ mit schwebendem Kondensator ein Quadrupel von elementaren Schaltern (K110, K120, K210, K220) umfasst, die in Reihe angeordnet sind, von denen sich zwei in einer Endposition befinden und zwei sich in einer mittleren Position befinden, und wobei die zwei elementaren Schalter (K110, K220) in der Endposition sich immer in komplementären Zuständen befinden und die zwei elementaren Schalter (K120, K210) in der mittleren Position sich immer in komplementären Zuständen befinden, wobei der eine leitend ist und der andere gesperrt ist.

10. Mehrpegelwandler nach einem der Ansprüche 6 bis 9, in dem in den zwei Zellen vom NPC-Typ (Ce21, Ce22) einer gleichen Elementarstufe die entsprechenden elementaren Schalter (T6u, T6l) identisch gesteuert werden.

11. Mehrpegelwandler nach einem der Ansprüche 6 bis 10, in dem die elementaren Schalter (K11, K12) jeweils einen elektronischen Wahlschalter mit steuerbarer Leistung (T11, T12) umfassen, der mit einer Diode (D11, D12) verbunden ist, die antiparallel geschaltet ist.

12. Mehrpegelwandler nach einem der Ansprüche 2 bis 11, in dem die Energiespeichervorrichtungen (C1-C10, Cf) aus einem Kondensator, einer Batterie, einer Brennstoffzelle ausgewählt sind.

13. Umrichter mit einer Kaskade mit einem Wandler (1) nach einem der vorangehenden Ansprüche, der als Wechselstrom/Gleichstrom-Gleichrichter funktioniert, und einem Wandler (2) nach einem der vorangehenden Ansprüche, der als Gleichstrom/Wechselstrom-Wechselrichter funktioniert, die durch ihre Gleichstromseiten über eine Spannungsquelle (3) miteinander verbunden sind.

**Claims**

1. Multi-level converter comprising one or more arms (B), configured to each be connected between a voltage source (VDC) and a current source (I),
in which the or each arm comprises two stages (Et1, Et2) connected in cascade with a first stage (Et1) intended to be connected to the voltage source (VDC), a second stage (Et2) intended to be connected to the current source (I), in which the first stage (Et1) comprises n elementary stages (E11, ..., E1n) of rank one to n (n greater than one) connected in cascade, the elementary stage (E11) of rank one being connected to the second stage (Et2) and the elementary stage (E1n) of rank n being intended to be connected to the voltage source (VDC), **characterized in that** each elementary stage (E11, E1n) comprises a pair of identical cells of NPC (Neutral Point Clamped) type (Ce11, Ce12; Cen1, Cen2) connected in series, the connection in series being direct in the elementary stage (E1) of rank 1, the connection in series being made via n-1 capacitive cells (Can(1), Can(n-1)) for each elementary stage of rank n (n greater than one), the second stage (Et2) comprising a cell of floating capacitor type (Ce10).

2. Multi-level converter according to Claim 1, in which a capacitive cell (Ca2(1)) comprises two energy storage devices (C3, C4) arranged in series, these energy storage devices having one and the same energy storage capacity.

3. Multi-level converter according to Claim 2, in which, in an elementary stage, the cells of NPC type (Ce21, Ce22) comprise a capacitive bridge with two energy storage devices (C1, C2: C5, C6) having one and the same energy storage capacity, and in which each energy storage device of a capacitive cell of this elementary stage has one and the same energy storage capacity as one of the energy storage devices of a cell of NPC type.

4. Multi-level converter according to Claim 3, in which all the energy storage devices (C1-C10) of the first stage (Et1) have one and the same energy storage capacity.

5. Multi-level converter according to one of Claims 1 to 4, in which at least one of the cells of NPC type (Ce21) of an elementary stage (E12) is connected to a cell of NPC type (Ce11) of a neighbouring elementary stage (E11) via an inductance (Laux11).

6. Multi-level converter according to one of Claims 1 to 5, in which a cell of NPC type comprises a quadruplet of elementary switches (K11, K12, K21, K22) arranged in series, two of which are in the extreme position and two of which are in the median position, in which an elementary switch (K11, K22) in the extreme position and an elementary switch (K21, K12) in the median position which are not directly linked are always in complementary states, one being enabled and the other being disabled, these two elementary switches (K11, K21; K12, K22) forming an elementary switching cell.

7. Multi-level converter according to Claim 6, in which each cell of NPC type (Ce21, Ce22) possesses a conversion function which relates the voltage applied at the input of said cell to the voltage present at the output of said cell and the two elementary switching cells of said cell also possess a conversion function.

8. Multi-level converter according to Claim 7, in which the cells of NPC type (Ce21, Ce22) of one and the same elementary stage (E11) have one and the same conversion function.

9. Multi-level converter according to one of Claims 1 to 8, in which a switching cell of floating capacitor type comprises a quadruplet of elementary switches (K110, K120, K210, K220) arranged in series, two of which are in the extreme position and two of which are in the median position, and in which the two elementary switches (K110, K220) in the extreme position are always in complementary states and the two elementary switches (K120, K210) in the median position are always in complementary states, one being enabled and the other being disabled.

10. Multi-level converter according to one of Claims 6 to 9, in which in the two cells of NPC type (Ce21, Ce22) of one and the same elementary stage, the homologous elementary switches (T6u, T6l) are controlled in an identical manner.

11. Multi-level converter according to one of Claims 6 to 10, in which the elementary switches (K11, K12) each comprise a controllable electronic power switch (T11, T12) associated with a diode (D11, D12) connected in antiparallel.

12. Multi-level converter according to one of Claims 2 to 11, in which the energy storage devices (C1-C10, Cf) are chosen from among a capacitor, a battery, a fuel cell.

13. Variable speed drive comprising a cascade with a converter (1) according to one of the preceding claims operating as an AC/DC rectifier and a converter (2) according to one of the preceding claims operating as a DC/AC inverter, linked together by their sides continuously by way of a voltage source (3).

FIG. 1A

EP 2 937 985 B1

FIG. 1B

FIG. 2A

FIG. 2C

FIG. 2B

EP 2 937 985 B1

FIG. 3A

FIG. 2D

20

FIG. 3C

FIG. 3B

FIG. 3E

FIG. 3D

FIG. 4A

FIG. 4B

FIG. 5A

FIG. 5B

FIG. 5C

FIG. 5D

FIG. 5E

FIG. 6.00

FIG. 6.01

FIG. 6.1

FIG. 6.2

FIG. 6.3

FIG. 6.4

FIG. 6.5

FIG. 6.6

FIG. 6.7

FIG. 6.8

FIG. 6.02

FIG. 7.1

FIG. 7.2

FIG. 7.3

FIG. 7.4

FIG. 7.5

FIG. 7.6

FIG. 7.7

FIG. 7.8

FIG. 7.9

FIG. 6.03

FIG. 6.04

FIG. 8.1

FIG. 8.2

FIG. 8.6

FIG. 8.7

FIG. 8.3

FIG. 8.4

FIG. 8.5

FIG. 9.1

FIG. 9.2

FIG. 10

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20070025126 A

- DE 102012214666 A1

**Littérature non-brevet citée dans la description**

- **ZHIGUO PAN et al.** *A diode-clamped multilevel converter with reduced number of clamping diodes*

- **ALIAN CHEN et al.** *Research on Hybrid-Clamped Multilevel-Inverter Topologies*